# EUROPÄISCHE PATENTSCHRIFT

(11) **EP 0 158 368 B1**
(45) Veröffentlichungstag und Bekanntmachung des Hinweises auf die Patenterteilung: **30.06.1993**
(21) Anmeldenummer: 85104520.3
(22) Anmeldetag: 15.04.1985
(51) Int. Cl.: H01M 2/10, A47B 47/00

(54) **Aus Einzelelementen zusammensetzbares Gestell für Notstrombatterien**
Single-component rail support arrangement for holding back-up batteries
Châssis d'éléments modulaires pour batteries de secours

(30) Priorität: 13.04.1984 DE 3414075
(43) Veröffentlichungstag der Anmeldung: 16.10.1985
(73) Patentinhaber: Kunstmann, Dieter J., D-89801 Buchloe (DE)
(72) Erfinder: Kunstmann, Dieter J., D-89801 Buchloe (DE)
(74) Vertreter: Haft, von Puttkamer, Berngruber, Czybulka

(56) Entgegenhaltungen:
- EP-A- 0 085 744
- DE-B- 1 171 578
- DE-U- 8 409 319
- FR-A- 1 237 544
- FR-A- 1 309 343
- GB-A- 648 451
- GB-A- 931 247
- US-A- 1 715 885

## Beschreibung

Die Erfindung betrifft ein aus Einzelelementen zusammensetzbares Gestell für Notstrombatterien von der im Oberbegriff des Anspruchs 1 angegebenen Art.

Ein derartiges Gestell ist aus der EU-OS 008 57 44 bekannt. Bei dem bekannten Gestell werden die horizontalen Balken mit den Ständerplatten durch Schraubverbindungen verbunden. Die Schrauben werden von unten durch die Schlitzöffnungen der Ständerplatten und durch an der Unterseite der Balken angebrachte, in Längsrichtung durchgehende Schlitze gesteckt und wirken mit plattenförmigen Muttern zusammen, die vorher in die als Hohlprofil ausgebildeten Balken eingeschoben worden sind. Das Anbringen dieser Schraubverbindungen ist sehr umständlich und zeitaufwendig, insbesondere, da es schwierig ist, die plattenförmige Mutter im Innern des Hohlprofils an der richtigen Stelle für die Schraube zu positionieren. Ferner werden die horizontalen Balken durch den an der Unterseite durchgehenden Schlitz geschwächt. Weiterhin hängt die Formstabilität des ganzen Gestells davon ab, daß alle Schraubverbindgen einwandfrei festgezogen sind. Bei lockeren Schraubverbindungen kann das Gestell wackeln bzw. unter dem Gewicht der schweren Notstrombatterien instabil werden.

Der Erfindung liegt die Aufgabe zugrunde, bei einem Gestell der genannten Art den Zusammenbau zu vereinfachen und die Stabilität zu verbessern.
erfindunsgemäße Lösung der Aufgabe ist im Anspruch 1 angegeben. Die Unteransprüche betreffen vorteilhafte weitere Ausgestaltungen.

Es ist zwar aus der US-PS 17 15 885 bereits bekannt, bei auseinandernehmbaren Gestellen für Zuschauerbänke die Bretter für die Sitzbänke mit nach unten weisenden Laschen zu versehen, die in entsprechende Öffnungen von Gestell-Leisten eingreifen und in ihrer Lage mit Steckstiften gesichert werden. Die Stabilität des Gestelles wird jedoch nicht durch diese Laschenverbindung, sondern durch Kreuzverbindungen zwischen den Gestell-Leisten und zusätzlichen Streben sichergestellt.

Aus der GB-A-648 451 ist ein zusammensetzbares fahrbares Gestell zur Aufnahme von Waren bekannt, das zwei auf Rädern fahrende bügelförmige Seitenteile aufweist, die miteinander durch Querstreben verbunden werden können. Diese Querstreben werden zu beiden Seiten jeweils mit zwei Haken in Löcher von Querleisten im Seitengestell eingehängt.

In keiner dieser beiden Schriften ist eine Klemmverbindung gemäß der Erfindung beschrieben, mit der die Einzelteile des Gestelles schnell aber gleichzeitig sicher und stabil miteinander verbunden werden können.

Ausführungsformen der Erfindung werden anhand der Zeichnung näher erläutert. Es zeigt
- Fig. 1: eine perspektivische Darstellung des Gestells;
- Fig. 2: im Schnitt eine Einzelheit des Gestells;
- Fig. 3: eine perspektivische Gesamtschau der zusammensetzbaren Einzelteile gemäß einer anderen Ausführungsform des Gestells.

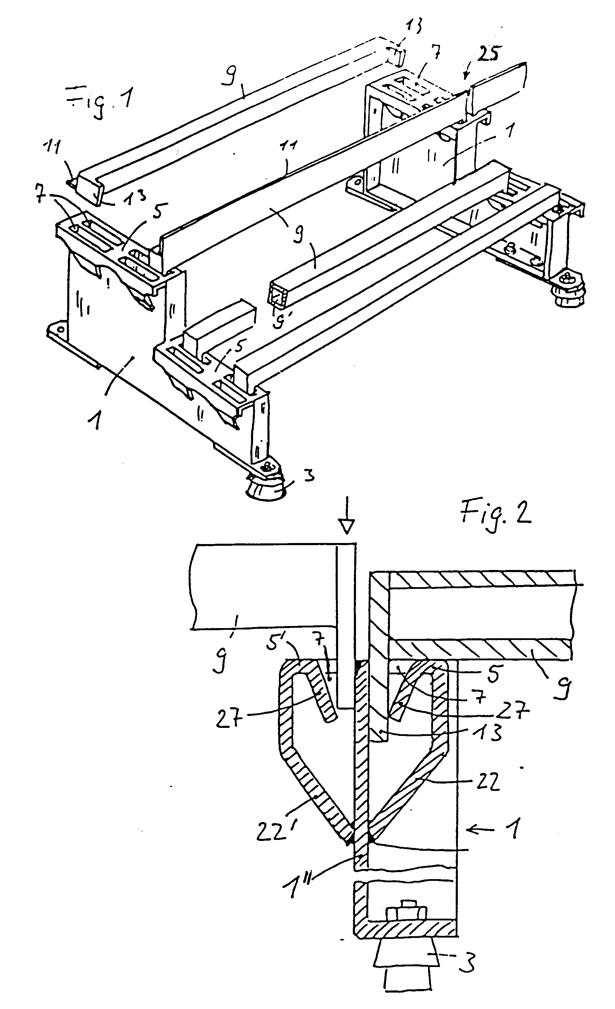

Das in Fig. 1 dargestellte Gestell hat lotrechte Ständerplatten 1, die entweder direkt oder über Isolatorfüße 3 auf dem Boden aufstehen können. Jede Ständerplatte ist vorzugsweise aus Blech geeigneter Stärke durch Abkanten derart hergestellt, daß eine flachkastenförmige Struktur gebildet wird. An der oberen Kante jeder Ständerplatte 1, die bei der Ausführungsform stufenförmig ausgebildet ist, ist ein nach beiden Seiten abstehender horizontaler Flansch 5 ausgebildet. In dem Flansch 5 sind paarweise zu beiden Seiten der Ständerplatte 1 langgestreckte Schlitzöffnungen 7 ausgebildet.

Die Ständerplatten 1 sind verbunden durch horizontale Balken 9, die entweder ein einfaches Vierkant-Hohlprofil sein können, wie bei 9' angedeutet, oder auch ein stuhlförmiges Profil mit einem vertikal nach oben stehenden Anschlagflansch 11 aufweisen können. An seinen beiden Enden weist jeder Balken 9 eine nach unten gerichtete Steckplatte 13 auf, die so bemessen ist, daß sie mit möglichst geringem Querspiel in eine Schlitzöffnung 7 einsteckbar ist. In Längsrichtung der Ständerplatten 1 kann die Breite der Steckplatten 13 kleiner als die Länge einer Schlitzöffnung 7 sein, so daß die Balken 9,9' etwas verschoben werden können, um einen an die Breite einer Notstrombatterie angepaßten Abstand einzustellen.

Die Einzelteile des Gestells können in verschiedenen Größen und Formen hergestellt werden, um dadurch Gestelle verschiedener Form und Größe zusammensetzen zu können. Die Ständerplatten können Längen von einer, zwei, drei oder vier Batteriebreiten aufweisen, wobei diese auf gleicher Höhe oder in zwei, drei oder vier Stufen unterschiedlicher Höhe angeordnet sein können. Auch können jeder Stufe bzw. Batteriebreite drei Paare von Schlitzöffnungen zugeordnet sein, so daß jeweils drei horizontale Balken pro Stufe eingesetzt werden können.

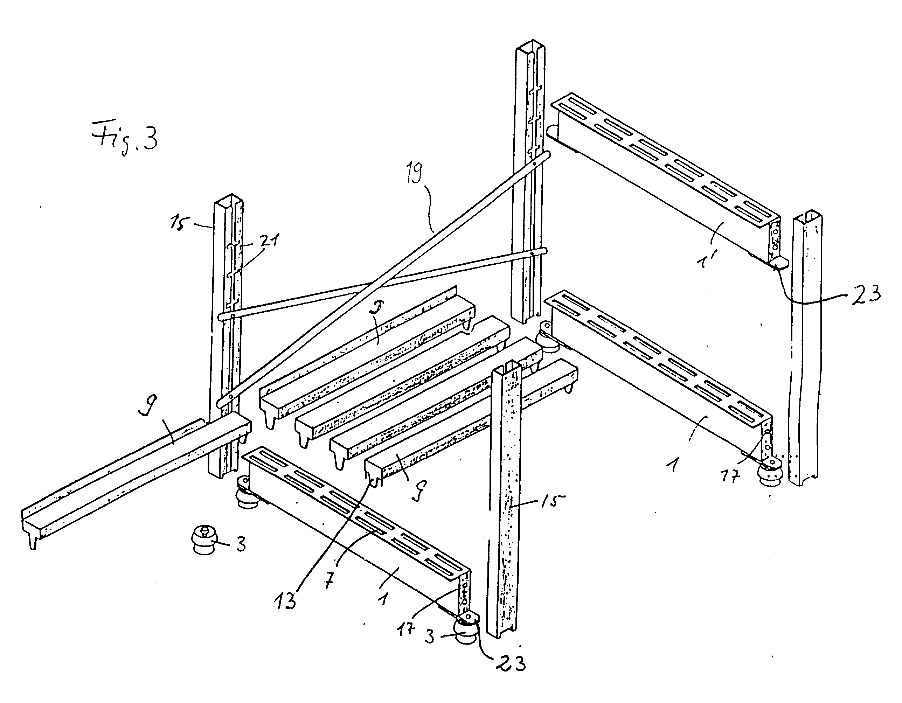

Bei der Ausführungsform nach Fig. 3 können mit den Ständerplatten 1 lotrechte Stützen 15 verbunden werden, z.B. mittels (nicht dargestellter)Schrauben, die durch Löcher 17 an den Stirnseiten der Ständerplatten 1 sowie durch einen Längsschlitz in den Stützen 15 hindurchgesteckt und mit einer in die Stützen 15 eingeschobenen Mutter oder Gewindelochplatte verschraubt werden. Die Stützen, die durch Diagonalstreben 19 versteift werden können, weisen kurze Querschlitze 21 auf. In diese können an den Stirnseiten Zusätzlicher Ständerplatten 1' vorstehende Konsolen 23 eingesteckt werden, so daß ein Gestell mit mehreren Etagen gebildet werden kann. Auch diese oberen, in die Schlitze 21 eingesetzten Ständerplatten 1' können zusätzlich mit den Stützen 15 verschraubt werden und werden natürlich ebenfalls mittels horizontaler Balken miteinander verbunden.

Bei unteren Ständerplatten 1 dienen die Konsolen 23 zum Befestigen der Isolatorfüße 3.

Durch doppelte Anordnung der Schlitzöffnungen 7 in den Flanschen 5 der Standerplatten 1 konnen in einfacher Weise fluchtend aneinander anschließende Balken 9 eingesteckt und miteinander verbunden werden, wie bei 25 in Fig. 1 sowie in Fig. 2 dargestellt.

Von besonderer Wichtigkeit ist es, daß durch das Einstecken der Steckplatten der Balken in die Schlitzöffnungen der Ständerplatten eine hinreichend feste und stabile Verbindung gebildet wird, damit das Gestell nicht wackelt oder unter dem Gewicht der darauf abgestellten Notstrombatterien zur Seite kippt. Zu diesem Zweck ist die Steckverbindung so gestaltet, wie in Fig. 2 im Schnitt dargestellt. Von der Seitenwand 1'' der Standerplatte 1 ist am oberen Rand nach einer Seite der Flansch 5 horizontal abgekantet, an dessen Außenkante weitere nach unten abgekantete Lappen 22 vorgesehen sind, die zurück zur Seitenplatte 1 führen und dort mittels einer Schweißverbindung 24 befestigt sind. Auf diese Weise wird ein sehr stabiles kastenartiges Hohlprofil geschaffen. Auf der anderen Seite der Seitenwand 1'' der Ständerplatte 1 ist ein entsprechendes Hohlprofil geschaffen mittels eines angeschweißten schienenartigen Teils, welches ebenfalls einen oberen horizontalen Flansch 5' sowie schräg gegen die Seitenwand 1' abgestützte und dort angeschweißte Lappen 22' aufweist. In den oberen horizontalen Flanschen 5' sind die Schlitzöffnungen 7 für die Anfnahme der Steckplatten 13 der Balken 9 in der Weise ausgebildet, daß Lappen 27 ausgestanzt und schräg nach unten abgeklinkt werden. Durch die Lappen 27 und die Seitenwand 1' erhält jede Schlitzöffnung 7 seitliche Begrenzungen mit nach unten konvergierendem Verlauf, d.h. mit nach unten abnehmender Breite. An ihrer unteren Kante haben die Lappen 7 von der Seitenwand 1'' vorzugsweise einen Abstand, der geringfügig kleiner ist als die Dicke einer Steckplatte 13. Beim Einführen einer Steckplatte 13 in eine Schlitzöffnung 7 unter Aufwendung einer Kraft, z.B. durch Hammerschläge in Richtung des Pfeiles 29, wird deshalb der Lappen 27 ein wenig federnd nach außen verformt. Wenn die Steckplatte 13 voll eingeschoben ist und der Balken 9 mit seiner Unterseite auf der Oberseite des Flansches 5 aufsitzt, ist die Steckplatte 7 durch den Lappen 27 eingeklemmt und wird mit satter Flächenanlage gegen die Seitenwand 1' angedrückt. Auf diese Weise wird eine außerordentlich stabile und wackelfreie Verbindung geschaffen.

Das ganze Gestell kann vorzugsweise auch aus kunststoffbeschichteten Stahlblechteilen bzw. Stahlprofilen bestehen.

## Patentansprüche

1. Aus Einzelelementen zusammensetzbares Gestell für Notstrombatterien, bestehend aus vertikalen Ständerplatten, die entlang ihrer oberen horizontalen Seiten eine horizontale Auflagefläche mit darin angebrachten Schlitzöffnungen aufweisen, sowie aus horizontalen Balken, die den Abstand zwischen den Ständerplatten überbrückend auf deren Flansche aufgelegt und durch in die jeweiligen Schlitzöffnungen eingreifende Elemente an ihnen festgelegt sind, wobei mindestens zwei parallel in gleicher Höhe zueinander verlaufende Balken jeweils eine Auflage für die Notstrombatterie bilden, dadurch gekennzeichnet, daß jeder Balken (9) an seinen Enden je eine starr angebrachte, nach unten vorstehende Steckplatte (13) aufweist, die in die zugehörige Schlitzöffnung (7) einsteckbar ist, und jede Steckplatte (13) in der Schlitzöffnung (7) mit Klemmsitz gehalten ist.

2. Gestell nach Anspruch 1, dadurch **gekennzeichnet**, daß die Breite der Schlitzöfnungen (7) im wesentlichen gleich der Dicke der Steckplatte (13) und die Länge der Schlitzöffnungen (7) größer als die Breite einer Steckplatte (13) ist.

3. Gestell nach Anspruch 1 oder 2, dadurch **gekennzeichnet,** daß jede Anflagefläche (5) zwei Reinen von paarweise nebeneinander angeordneten Schlitzöffnungen (7) aufweist, in welche die Steckplatten (13) von jeweils zwei in Längsrichtung fluchtend aneinander anschließende Balken einsteckbar sind.

4. Gestell nach Anspruch 3, dadurch **gekennzeichnet**, daß die horizontale Auflagefläche jeder Ständerplatte nach beiden Seiten der Platte flanschartig vorsteht und je eine Reihe von Schlitzöffnungen auf der einen und anderen Seite der Platte (1) angeordnet ist.

5. Gestell nach einem der Ansprüche 1 bis 4, dadurch **gekennzeichnet**, daß jede Ständerplatte (1) die Form eines flachen Kastens mit auf allen Seiten abgekanteten Flanschen aufweist.

6. Gestell nach einem der Ansprüche 1 bis 5, dadurch **gekennzeichnet**, daß die Balken aus einem rundum geschlossenen Hohlprofil bestehen.

7. Gestell nach einem der Ansprüche 1 bis 6, dadurch **gekennzeichnet,** daß jede Schlitzöffnung eine nach unten konisch konvergierende Form hat.

8. Gestell nach Anspruch 7, dadurch gekennzeichnet, daß jede Schlitzöffnung auf der einen Seite von der lotrechten Wand (1') der Ständerplatte (1) und auf der anderen Seite von einem schräg nach unten ausgeklinkten Lappen (27) begrenzt ist, welcher der Seitenwand (1') mit einem Abstand, der geringfügig kleiner als die Dicke einer Steckplatte (13) ist, gegenübersteht.

## Claims

1. A rack for floating batteries to be put together from single elements, comprising vertical plates having along each upper horizontal side a horizontal supporting surface with slotted openings provided therein, and horizontal bars which are placed on the flanges of the vertical plates so as to bridge the distance therebetween and are fixed thereto by elements engaging the particular slotted openings, whereby at least two bars extending parallel to each other at the same height each form a support for the floating battery, characterized in that each bar (9) has at each end a rigidly mounted, downwardly protruding insertion plate (13) adapted to be inserted into the corresponding slotted opening (7), and each insertion plate (13) is held in the slotted opening (7) with a press fit.

2. The rack of claim 1, characterized in that the width of the slotted openings (7) is substantially equal to the thickness of the insertion plate (13) and the length of the slotted openings (7) is greater than the width of an insertion plate (13).

3. The rack of claim 1 or 2, characterized in that each supporting surface (5) has two rows of slotted openings (7) disposed side by side in pairs into which the insertion plates (13) of a pair of bars joined together in alignment in the longitudinal direction are adapted to be inserted.

4. The rack of claim 3, characterized in that the horizontal supporting surface of each vertical plate protrudes in a flange-like way on each side of the plate, and a row of slotted openings is disposed on each side of the plate (1).

5. The rack of any of claims 1 to 4, characterized in that each vertical plate (1) has the form of a flat box with flanges folded on all sides.

6. The rack of any of claims 1 to 5, characterized in that the bars consist of a hollow section closed all around.

7. The rack of any of claims 1 to 6, characterized in that each slotted opening has a downwardly convergent conical form.

8. The rack of claim 7, characterized in that each slotted opening is limited on one side by the vertical wall (1') of the vertical plate (1) and on the other side by an obliquely downward folded tab (27) which stands opposite the side wall (1') at a distance slightly smaller than the thickness of an insertion plate (13).

## Revendications

1. Châssis composé d'éléments constitutifs pour batteries de secours, constitué de montants en forme de plaques qui présentent le long de leurs côtés supérieurs horizontaux une surface d'appui munie de fentes, ainsi que de poutres horizontales qui franchissent l'espace situé entre les montants, étant posées sur leurs brides et fixées sur celles-ci par des éléments engagés dans les fentes correspondantes, au moins deux poutres s'étendant parallèlement sur la même hauteur forment le support pour la batterie de secours, caractérisé en ce que chaque poutre (9) présente à chacune de ses extrémités une plaque enfichable (13) disposée de façon rigide et faisant saillie vers le bas, qui peut être enfichée dans la fente (7) correspondante et en ce que chaque plaque enfichable (13) est fixée par serrage dans la fente (7).

2. Châssis selon la revendication 1, caractérisé en ce que la largeur des fentes (7) est sensiblement égale à l'épaisseur de la plaque enfichable (13) et la longueur des fentes (7) est supérieure à la largeur d'une plaque enfichable (13).

3. Châssis selon la revendication 1 ou 2, caractérisé en ce que chaque surface d'appui (5) présente deux rangées de fentes (7) disposées par paires, dans lesquelles peuvent être enfichées les plaques enfichables (13) de respectivement deux poutres adjacentes en alignement.

4. Châssis selon la revendication 3, caractérisé en ce que la surface d'appui horizontale de chaque montant en forme de plaque fait saillie de chaque côté du montant pour former une bride et qu'une rangée de fentes est disposée sur l'un et l'autre côté du montant.

5. Châssis selon l'une des revendications 1 à 4, caractérisé en ce que chaque montant (1) présente la forme d'une caisse platte avec brides repliées à vive arête.

6. Châssis selon l'une des revendications 1 à 5, caractérisé en ce que les poutres consistent en un profil creux fermé de tous les côtés.

7. Châssis selon l'une des revendications 1 à 6, caractérisé en ce que chaque fente a vers le bas une forme convergente conique.

8. Châssis selon la revendication 7, caractérisé en ce que chaque fente est limitée d'un côté par la paroi verticale (1') du montant (1) et de l'autre côté par une patte (27) faisant encoche qui fait face à la paroi latérale (1') avec un espace qui est légèrement inférieur à la largeur d'une plaque enfichable (13).
